**Europäisches Patentamt**

**European Patent Office**

**Office européen des brevets**

(19)

(11) Publication number: **0 095 939**
**A2**

(12) # EUROPEAN PATENT APPLICATION

(21) Application number: **83303147.9**

(22) Date of filing: **01.06.83**

(51) Int. Cl.³: **B 64 C 3/40**

(30) Priority: **01.06.82 GB 8215989**

(43) Date of publication of application: **07.12.83**
**Bulletin 83/49**

(84) Designated Contracting States: **DE FR GB IT**

(71) Applicant: **WOODVILLE POLYMER ENGINEERING LIMITED, Alton Lane, Ross-on-Wyne Herefordshire HR9 5NF (GB)**

(72) Inventor: **Broadhurst, Jeffrey Charles, 199 Burton Road, Branston Burton-on-Trent Staffordshire (GB)**

(74) Representative: **Smith, Philip Antony et al, REDDIE & GROSE 16 Theobalds Road, London WC1X 8PL (GB)**

(54) **Inflated-bag seals for swing-wing aircraft.**

(57) In an inflated-bag seal for sealing the gap between a swing-wing and the fuselage of an aircraft the internal diaphragms which connect the three principal walls of the bag and thus define its shape and dimensions are made from a triaxially-woven fabric. The fibres of the fabric are arranged to run in such directions that they provide maximum possible tensile strength against outward pressures acting on each of the walls and especially on the two free-standing walls.

The diaphragm edges are attached to the walls by various constructions using connecting strips of square-weave material attached against the wall and against the margin of the diaphragm, preferably with a weft-only zone between the edge of the diaphragm and the wall to increase the flexibility of the assembly.

## INFLATED-BAG SEALS FOR SWING-WING AIRCRAFT

The present invention relates to inflated-bag seals for swing-wing aircraft. Such seals are designed to seal the gap between the fuselage of the aircraft and the wing while allowing the wing to change its angle relative to the fuselage and part of the wing root to be retracted with the fuselage. The seal thus preserves the shape of the junction between the fuselage and the wing by forming an extension of the fuselage surface.

Various forms of such seal are known which usually comprise a pair of inflated bags for engagement with the upper and lower surfaces of the wing. In our U.S. Patent Specification No. 4,029,272 we have described such a seal in which each of the inflated bags comprises longitudinal walls of flexible material forming a bag with three principal sides and flexible, air-transmitting, transverse internal diaphragms attached at their edges to the longitudinal walls. In such a construction the shape and dimensions of the bag are determined by the diaphragms rather than by the manner in which the bag is supported in the fuselage. To enable the diaphragms to withstand the stresses encountered in use, our prior patent described and claimed a multi-part costruction of the diaphragm using individual reinforcing webs for each part.

This structure is being successfully used in operational aircraft but while it achieves the required physical properties it adds to the difficulties of manufacture and increases the weight of the seal.

The present invention concerns an improved form of diaphragm which overcomes those disadvantages by the use of a triaxially woven fabric.

Such fabrics, instead of the conventional warp and weft running perpendicular to one another, have three groups of threads which usually run at 60° to one another. In the basic weave single threads are interwoven. A basket weave using pairs of threads is also possible. A further variant is the Bi-Plain weave. These materials can be woven on special looms such as the T W 2000 machine supplied by the Textile Machinery Division of Barber-Colman Company of Rockford, Illinois, United States of America. The fabrics themselves are available from suppliers such as Gentex Corporation of Carbondale, Pennsylvania, United States of America. The threads used in producing triaxial weave fabrics may be nylons, polyesters and other synthetic materials such as those sold under the trade names NOMEX and KEVLAR. The preferred material for present purposes is Nylon 66. The fabric may be used as it is or with a coating of elastomer.

The essential difference from the prior construction is that because of the properties of a triaxial weave fabric it is no longer necessary to make the diaphragm from a number of separately reinforced parts. The body of the diaphragm can be made of a single sheet of triaxial-weave fabric. The other features of the prior constructions can be retained and in particular various methods of attachment of the diaphragms to the walls of the bag can be used as described in the prior patent specifications referred to above.

In accordance with the present invention there is provided an inflated-bag seal for sealing between the fuselage and the wing of a swing-wing aircraft the seal including longitudinal walls of flexible material forming a bag with three principal sides and flexible, air-transmitting, transverse internal diaphragms attached at their edges to the longitudinal walls characterized in that said diaphragms are each made in one piece from a triaxially woven fabric.

In such a seal one of the longitudinal walls usually forms a base wall which is attached to the fuselage along its edges while the other two principal walls stand free and are joined at their outer edge by a rounded nose or a fourth wall which engages the wing. Preferably the fibres of the triaxially-woven fabric which extend parallel to two of the three axes are arranged transverse to the free-standing walls of the bag to provide the maximum possible tensile strength in a direction perpendicular to each of these walls. Because the angle between the two walls may be dictated by other considerations and because the axes of the fabric may be predetermined by the manufacturer the fibres may be at an angle to the desired perpendicular direction but this angle should be made as small as possible.

The transmission of air or other inflating gas through the diaphragms, which is required in order to equalize the internal pressure throughout the compartments formed by the diaphragms, may be secured by the use of a permeable fabric which, at least in some areas, is not coated in such a way as to prevent air-transmission. In particular more permeable material may be used to attach the edges of the diaphragm to the walls so that air-transmission takes place around the edges of the diaphragm. It is also possible to provide aperatures in the diaphragm to facilitate air flow between the compartments.

While the edges of the diaphragms may have integral flanges which are attached to the longitudinal walls it is also possible to use connecting strips to join the diaphragms to the walls. In one construction these strips comprise two parallel edge zones of square-woven fabric with a central zone consisting of weft threads only. The edge zones are fastened against the wall and the diaphragm margin, respectively, while the central zone forms an extension of the margin of the diaphragm and provides a flexible connection between the diaphragm and the wall.

The central zone of the connecting strip may also provide a permeable region for transmission of air between the compartments.

In an alternative construction the edge of each diaphragm is attached to the corresponding wall by two connecting strips which are attached to the wall along spaced parallel lines such that the diaphragm lies symmetrically between these two lines and the two connecting strips diverge from the diaphragm towards the wall.

The invention will now be described in more detail with the aid of examples illustrated in the accompanying drawings, in which

Fig. 1 shows a diaphragm in an inflated-bag seal in accordance with the invention,

Fig. 2 is a view similar to Fig. 1 showing a different manner of attachment of the diaphragm to the bag walls,

Fig. 3 is a sectional view of the diaphragm assembly of Fig. 2,

Fig. 4 is a detail of a modification of Fig. 3,

Fig. 5 is a sectional view showing a further manner of attachment of the diaphragms to the wall, and

Fig. 6 is a sectional view of yet another manner of attachment of the diaphragms to the walls.

The reader is here referred to our U.S. Patent Specification No. 4,029,272, referred to above, which is incorporated in the present specification by reference. Essentially the present invention differs only in regard to the diaphragms and for other details of the sealing assembly reference can be made to the prior patent.

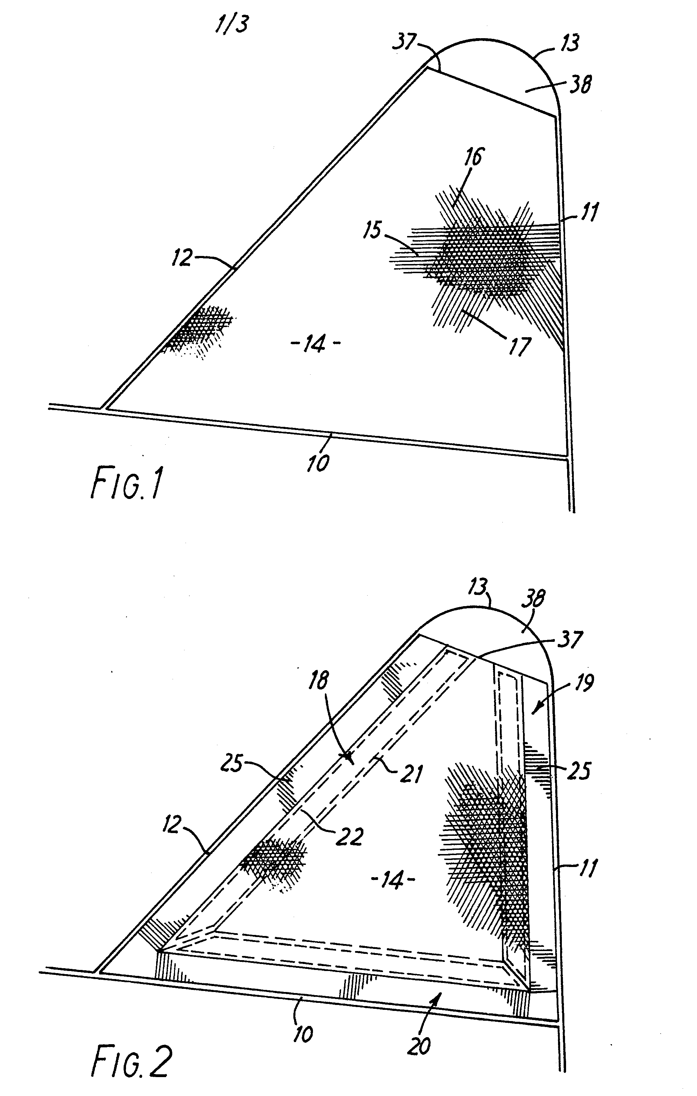

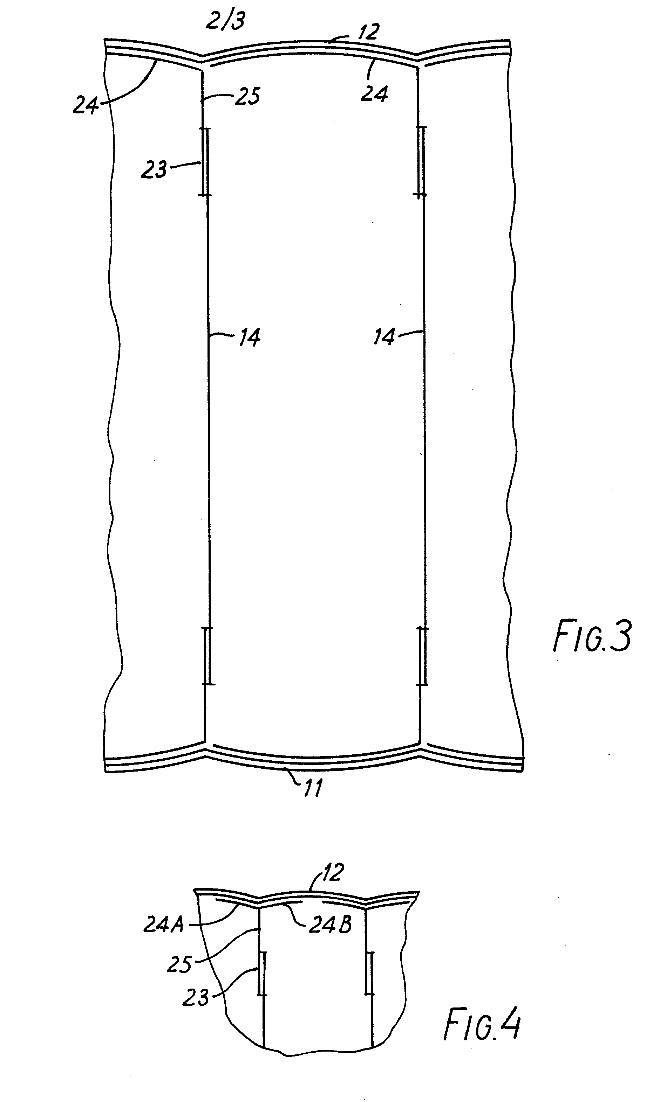

As shown in Fig. 1 the bag is constructed with three principal longitudinal walls 10, 11 and 12 in the manner described with reference to Figs. 4A to 4D of the prior patent. Wall 10 forms the base wall of the bag which is attached along its edges to the aircraft fuselage. The walls 11 and 12 are free-standing and are joined at their free edges by a curved nose 13 which which engages the aircraft wing. A similar bag forms the other half of the seal and the swing wing passes between the two bags. The longitudinal walls of the bag are connected to internal diaphragms spaced at intervals along the length of the bag.

Fig. 1 shows a diaphragm 14 of triaxially-woven fabric which is of tri-lateral shape and is joined along its edges directly to the walls 10, 11 and 12. It will be seen that the fibres 15 of the triaxial fabric diaphragm 14 run substantially perpendicular to the wall 11 of the bag. The fibres 16 are not exactly perpendicular to the wall 12 but only depart from the perpendicular by a small angle. The fibres 17 are at a greater angle to the perpendicular from the wall 10 but nevertheless provide a tensile force resisting any bulging of the wall 10. The arrangement of the fibres of the triaxial fabric thus ensures that the diaphragms resist bulging of the inflated bag and determine the shape and dimensions of the bag.

While Fig. 1 shows the edges of the diaphragm 14 connected directly to the walls 10, 11 and 12 it will usually be more convenient for manufacturing purposes and provide greater flexibility in the finished bag if the connection is made by means of strips or ribbons attached to the three edges of the diaphragm. Examples of various methods of attachment are illustrated in the remaining Figures of the drawings. These are similar to some of the methods described in our prior patent.

Figs. 2 and 3 show an arrangement in which the triaxially-woven diaphragm 14, arranged with its fibres running in the same directions as in Fig. 1, has connecting strips 18, 19 and 20 stitched to its edges along inner and outer stitch lines 21 and 22. The zone 23 (Fig.3) of each strip which is stitched to the margins of the diaphragm is of normal square-weave construction, as is the zone 24 attached to the wall of the bag, but the central zone 25 of each strip has fibres running in one direction only, perpendicular to the wall and the edge of the strip, to form a free connecting zone. As shown in Fig. 3 the zone 24 extends over the major part of the wall between adjacent diaphragms. It is attached to the wall by means of a heat-curable bonding agent and further secured by stitching.

In Fig. 4 the connecting strips are of T-formation with arms 24A and 24B extending on opposite sides of the central connecting zone 25 but the construction is otherwise as shown in Fig.3.

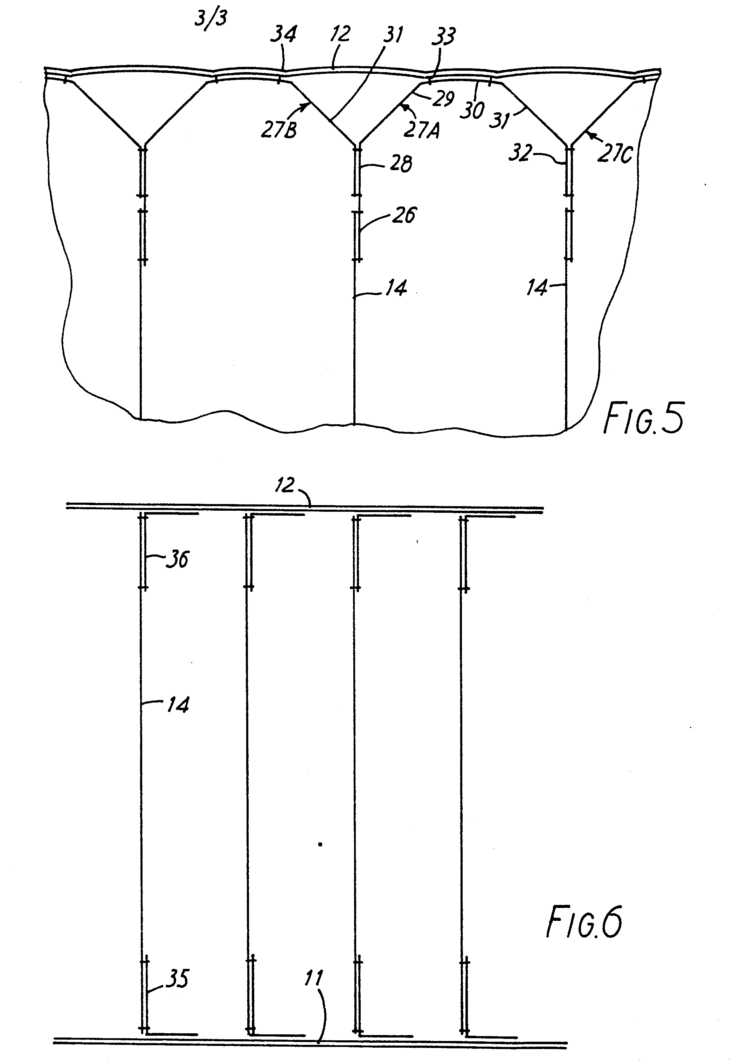

In Fig. 5 each edge of each diaphragm 14 is connected with the corresponding wall of the bag by means of two connecting strips. A square-weave zone 26 of a connecting strip 27A is stitched to the edge of the diaphragm. An adjacent square-weave zone 28 is stitched to a second connecting strip 27B. A weft-only zone 29 joins the diaphragm 14 to the wall 12 and a further square-weave zone 30 is secured against the wall. A second weft-only zone 31 of the same connecting strip 27A runs from the wall towards the diaphragm and a square-weave edge zone 32 of the strip 27A is stitched to a further connecting strip 27C. The free zones 29 and 31 of two strips 27A and 27B, connected to the wall along spaced parallel lines 33 and 34, respectively, thus form a triangular connection between the wall and each diaphragm with the diaphragm 14 lying symmetrically between the lines 33 and 34.

In Fig. 6 diaphragms 14 of triaxial fabric are connected to walls 11 and 12 by attached flanges 35 and 36 of square-weave fabric.

In each of the cases described the diaphragms are so constructed as to allow air to pass from one side of the diaphragm to the other in order to equalize the pressure within the bag. In some cases this is achieved by the use of an open-weave fabric, in others by the provision of apertures in the diaphragm. The free zones 25 and 29 and 31 also provide in some cases for transmission of air. Where bonding agents and other coatings are used they must not seal the whole area of the diaphragm in such a way as to prevent air transmission.

As shown in Figs. 1 and 2 each diaphragm is cut away along a line 37 close to the nose 13, leaving a space 38. This facilitates deformation of the nose 13 as the wing moves between the bags to maintain a close seal.

WHAT IS CLAIMED IS:

1.      In an inflated-bag seal for sealing between the fuselage and the wing of a swing-wing aircraft the seal including longitudinal walls of flexible material forming a bag with three principal sides and flexible, air-transmitting, transverse internal diaphragms attached at their edges to the longitudinal walls, the improvements wherein the said diaphragms are each formed from a triaxially-woven fabric.

2.      In a seal as claimed in claim 1 having one of said walls forming a base wall which is attached along its edges to the aircraft fuselage the improvement wherein the fibres of the triaxial fabric which run parallel to two of the three axes are transverse to the other two of said walls and as nearly as possible perpendicular thereto.

3.      A seal as claimed in claim 1 in which each diaphragm is attached to the walls by flanges secured to the margins of the diaphragm.

4.      A seal as claimed in claim 3 in which each flange comprises a first square-weave zone attached to the diaphragm margin, a second square-weave zone attached to the wall, and a central zone extending between the edge of the diaphragm and the wall and composed of threads running in one direction only.

5.      A seal as claimed in claim 4 in which each diaphragm edge is attached to the wall by a pair of said flanges whose central zones diverge from the diaphragm towards the wall.

0095939

6.     A seal as claimed in claim 2 in which each diaphragm edge is connected to the adjacent wall of the bag by a central zone of a connecting strip, the central zone having threads running in one direction only and connecting square-weave zones of the strips which are secured against the wall and against the margin of the diaphragm.

0095939

FIG.1

FIG.2

2/3

12

24

25

24

23

14

14

*FIG.3*

11

12

24A

24B

25

23

*FIG.4*

FIG.5

FIG.6